# FASCICULE DE BREVET EUROPEEN

(11) **EP 2 644 242 B1**
(45) Date de publication et mention de la délivrance du brevet: **02.09.2020**
(21) Numéro de dépôt: 13161649.2
(22) Date de dépôt: 28.03.2013
(51) Int. Cl.: B01D 35/147, B01D 35/16

(54) **Ensemble de filtrage comportant une cartouche de filtration, et méthode**
Filtereinheit, die eine Filterkartusche umfasst, und Verfahren
Filter assembly comprising a filter cartridge, and method

(30) Priorité: 30.03.2012 WO PCT/FR2012/050705; 20.09.2012 US 201213636144
(43) Date de publication de la demande: 02.10.2013
(60) Demande divisionnaire: 20188500.1
(73) Titulaire: Cummins Filtration SARL, 29556 Quimper Cedex (FR)
(72) Inventeur: MALGORN, Gérard, 29000 QUIMPER (FR); BAGCI, Ismail C., COOKEVILLE, TN Tennessee TN 38506 (US)
(74) Mandataire: Collet, Alain

(56) Documents cités:
- DE-A1- 19 809 989
- DE-U1- 20 004 431

## Description

### 1. Domaine de l'invention

L'invention concerne le domaine de la conception et de la réalisation des ensembles de filtrage utilisés pour filtrer les fluides circulant dans les moteurs ou les équipements hydrauliques.

De tels ensembles de filtrage sont constitués par un corps de filtre, comprenant une cuve et un couvercle, à l'intérieur duquel est disposée une cartouche de filtration comportant un médium de filtration présentant généralement une forme cylindrique entourant une lumière tubulaire, pouvant par exemple être en papier, en carton ou encore en feutre ou en une autre matière poreuse, telle qu'une matière non tissée synthétique. La cartouche de filtration comprend également deux flasques d'extrémités délimitant le médium de filtration.

De telles cartouches de filtration coopèrent généralement avec un tube, notamment central, solidaire ou non des flasques, dont le diamètre extérieur avoisine le diamètre intérieur de la lumière tubulaire entourée du médium de filtration, de façon à limiter les déformations du médium sous l'effet de la pression s'exerçant à l'intérieur de l'ensemble de filtrage.

Les flasques d'extrémité sont formés par un premier flasque, pouvant consister en un flasque supérieur, et un deuxième flasque, pouvant consister en un flasque inférieur. Le rôle des flasques est de participer à l'étanchéité de la cartouche de filtration et de permettre la solidarisation de la cartouche de filtration à la partie permanente de l'ensemble de filtrage.

### 2. Solutions de l'art antérieur

Le brevet US 5 770 054 décrit un ensemble de filtrage dont le tube central loge un élément obturateur de soupape et un organe de rappel tandis que la cartouche de filtration, dans son flasque supérieur, définit une surface formant siège de soupape, entourant une ouverture. L'élément obturateur est agencé pour venir en contact du siège de soupape, dans une position d'obturation. Lors du remplacement de la cartouche de filtration, le siège de soupape est remplacé, tandis que l'élément obturateur et l'organe de rappel restent à demeure sur le tube central. Un inconvénient d'un tel système est que l'élément obturateur dans la zone d'obturation est souillé et le reste, même avec le changement de la cartouche de filtration.

On connaît d'autres ensembles de filtrage où la soupape de sécurité comprenant le siège de soupape, l'élément obturateur et l'organe de rappel fait entièrement partie de la cartouche de filtration. De tels ensembles génèrent des coûts d'entretien élevés. La cartouche de filtration n'est alors pas incinérable.

On connaît aussi de DE 20 004 431U un ensemble de filtrage comportant une cartouche de filtration avec un flasque comportant un élément obturateur capable d'obturer un siège de soupape dudit flasque, ledit élément obturateur étant solidaire dudit flasque tout en permettant une mobilité axiale.

### 3. Objectifs de l'invention

L'invention a donc notamment pour objectif de pallier tout ou partie de ces inconvénients de l'art antérieur.

Plus précisément, l'invention a pour objectif de fournir un ensemble de filtrage qui soit performant, tout en limitant le coût d'entretien et de remplacement de la cartouche de filtration.

L'invention a encore pour objectif de fournir une cartouche de filtration incinérable, notamment dépourvue de parties métalliques.

L'invention a encore pour objectif de fournir une cartouche de filtration qui soit adaptable à des pressions seuils d'ouverture de soupapes différentes, sans modification du reste de l'ensemble de filtrage.

L'invention a ainsi pour objectif de fournir la possibilité à un utilisateur de choisir un type de cartouche de filtration, en fonction de la pression seuil d'ouverture de soupape qu'il souhaite, sans modification de la partie permanente de l'ensemble de filtrage.

### 4. Exposé de l'invention

L'invention répond à tout ou partie de ces objectifs grâce à un ensemble de filtrage selon la revendication 1, pour filtrer au moins un fluide circulant notamment dans un moteur ou un équipement hydraulique.

Grâce à l'invention, la cartouche de filtration comporte à la fois l'élément obturateur et le siège de soupape de telle sorte que cet ensemble de deux parties souillées lors de l'utilisation de l'ensemble de filtrage soit remplacé avec la cartouche de filtration.

Il est à noter que l'organe de rappel appartient à la partie permanente de l'ensemble de filtrage, de même que le corps de filtre et que le tube notamment central situé à l'intérieur du corps de filtre.

Un autre avantage de l'invention est que la seule modification des dimensions de l'élément obturateur peut permettre de modifier la pression seuil d'ouverture de la soupape formée par le siège de soupape, l'élément obturateur et l'organe de rappel, en fonction de ce que souhaite l'utilisateur, sans toutefois toucher à la partie permanente de l'ensemble de filtrage. Un même ensemble de filtrage sera ainsi modifié dans ses performances, sans toutefois avoir à modifier la partie permanente mais seulement la partie amovible de l'ensemble de filtrage, à savoir la cartouche de filtration.

Selon un mode de réalisation particulier, le premier flasque comporte une ouverture, notamment circulaire, dans laquelle l'élément obturateur est retenu tout en étant mobile en translation entre une position correspondant à la position de fermeture et une position correspondant à une position d'ouverture de la soupape.

Ainsi, le premier flasque et l'élément obturateur coopèrent de manière à permettre à l'élément obturateur d'assurer sa fonction d'ouverture et de fermeture de la soupape, en fonction de la pression exercée par le fluide sur l'élément obturateur et, en réaction, de la force de l'organe de rappel exercée à l'opposé sur l'élément obturateur. C'est l'organe de rappel qui contraint l'élément obturateur dans la position de fermeture lorsque la pression exercée à l'opposé sur l'élément obturateur est inférieure à un seuil de pression prédéterminé.

Dans ce cas, l'ouverture peut par exemple être délimitée par une portion tubulaire et un élément en saillie de l'élément obturateur peut venir en butée contre un épaulement intérieur de la portion tubulaire, lors du montage. Cela permet de fixer une limite à l'ouverture de l'élément obturateur dans la position d'ouverture maximum, lors du montage, et de retenir l'élément obturateur sur le premier flasque et donc sur la cartouche de filtration. Lors de l'utilisation, cette ouverture maximum peut ne pas être atteinte, un jeu pouvant être ménagé entre l'élément obturateur et l'élément en saillie. Pour ce faire, l'élément obturateur peut par exemple être retenu en appui par le tube pour ménager ce jeu et empêcher l'élément obturateur d'atteindre la position d'ouverture maximum.

L'ouverture peut, notamment dans ce cas, être confondue au moins partiellement avec l'orifice traversant le siège de soupape et obturé par l'élément obturateur dans sa position de fermeture.

Il est à noter que l'orifice traversant le siège de soupape peut être au nombre de plusieurs orifices, ou d'un seul orifice, obturé(s) par la surface d'obturation lorsque l'élément obturateur est dans la position d'obturation ou position de fermeture.

Dans un autre exemple, l'ouverture est distincte dudit au moins un orifice traversant le siège de soupape et au travers duquel peut passer le fluide, en position d'ouverture de l'élément obturateur.

L'élément obturateur peut comporter une jupe présentant la surface d'obturation apte à venir en contact avec le siège de soupape, dans la position de fermeture de l'élément obturateur.

Le tube peut être au moins partiellement creux et l'organe de rappel peut être monté dans le tube.

Selon un mode de réalisation préféré, l'organe de rappel comporte un ressort, notamment hélicoïdal. L'invention n'est cependant pas limitée à un ressort hélicoïdal. En particulier, l'organe de rappel peut comporter un ressort à lame ou un matériau élastique.

Dans un mode de réalisation particulier, le tube de l'ensemble de filtrage peut présenter une extrémité libre formant au moins partiellement un bord s'étendant diamétralement vers l'intérieur de manière à retenir l'organe de rappel venant en butée contre ledit bord.

Le tube peut, en variante, comporter, dans une partie d'extrémité libre, un logement configuré pour loger et maintenir l'organe de rappel, sans toutefois l'empêcher de remplir son rôle de rappel de l'élément obturateur dans la position de fermeture.

L'élément obturateur peut comporter une zone de coopération avec l'organe de rappel, comportant une surface d'appui de l'organe de rappel et/ou une zone de guidage de l'organe de rappel.

Pour résumer, l'élément obturateur comporte, selon un mode de réalisation de l'invention, une zone de solidarisation avec le premier flasque, une zone d'obturation du siège de soupape et une zone de coopération avec l'organe de rappel.

Le corps de filtre comporte avantageusement une cuve et un couvercle comprenant des moyens de coopération entre eux étanches mais amovibles, de manière à permettre le remplacement de la cartouche de filtration.

Le médium de filtration peut être choisi dans le groupe constitué par : la cellulose, notamment le papier ou le carton, le feutre, un matériau poreux tissé ou non-tissé, synthétique ou non, et tout autre médium de filtration convenable.

L'élément obturateur peut comporter un matériau polymère, notamment du polyamide. Avantageusement, l'élément obturateur est réalisé en un matériau incinérable.

### 5. Liste des figures

D'autres caractéristiques et avantages de l'invention apparaîtront plus clairement à la lecture de la description suivante de modes de réalisation de l'invention, donnés à titre d'exemples illustratifs et non limitatifs et du dessin annexé dans lequel :
- la figure 1 représente une coupe schématique d'un ensemble de filtrage conforme à un premier mode de réalisation de l'invention,
- la figure 2 illustre isolément, en coupe schématique, la cartouche de filtration de l'ensemble de filtrage de la figure 1,
- la figure 3 est une vue en coupe schématique d'une partie permanente de l'ensemble de filtrage de la figure 1, dépourvue de la cartouche de filtration,
- les figures 4 et 5 illustrent de manière schématique et partielle, en coupe, l'ensemble de filtrage de la figure 1 lors de son fonctionnement,
- la figure 6 illustre schématiquement, isolément et partiellement, en coupe et en perspective, le tube de l'ensemble de filtrage de la figure 1,
- la figure 7 est une vue similaire à la figure 6, l'organe de rappel étant de plus positionné dans le tube,
- la figure 8 illustre de manière schématique et partielle un ensemble de filtrage vu en coupe et conforme à un deuxième mode de réalisation de l'invention,
- la figure 9 représente de manière schématique et partielle la partie de soupape de l'ensemble de filtrage de la figure 8,
- la figure 10 représente isolément, de manière schématique et en perspective, vu de dessous, le premier flasque muni de l'élément obturateur de l'ensemble de filtrage de la figure 8, et
- la figure 11 représente isolément, de manière schématique et en perspective, vu de dessus, le premier flasque muni de l'élément obturateur de l'ensemble de filtrage de la figure 8.

### 6. Description détaillée de modes de réalisation de l'invention

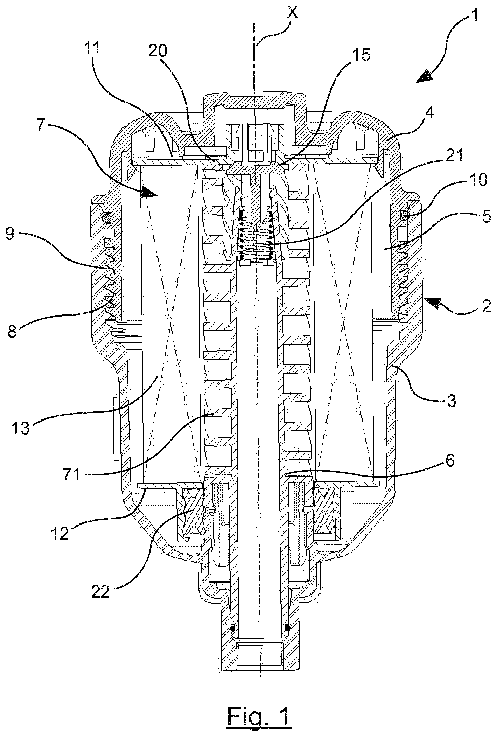

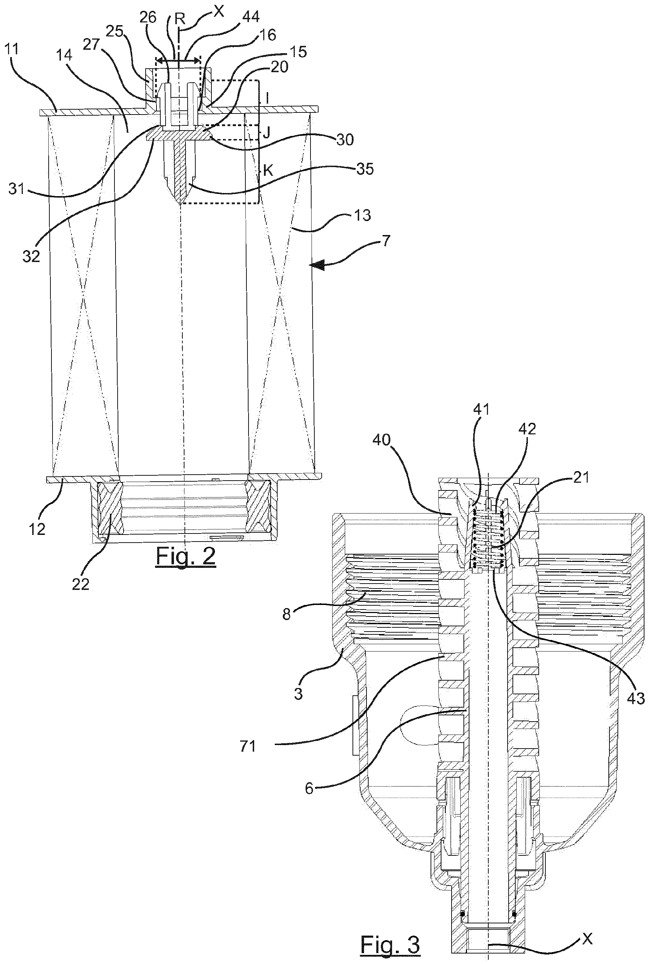

On a représenté sur la figure 1 un ensemble de filtrage 1 pour fluide circulant dans un moteur ou un équipement hydraulique. Cet ensemble de filtrage 1 comprend un corps de filtre 2 comportant une cuve 3 et un couvercle 4. Le corps de filtre 2 délimite un volume 5 à l'intérieur duquel l'ensemble de filtrage 1 comporte un tube 6, central dans cet exemple. L'ensemble de filtrage 1 comporte également une cartouche de filtration 7 représentée isolément sur la figure 2.

La cuve 3 est munie d'un filetage intérieur 8 et le couvercle 4 est muni d'un filetage extérieur 9 apte à être vissé sur le filetage intérieur 8 de la cuve 3 de manière à fermer l'ensemble de filtrage 1. L'étanchéité de l'ensemble de filtrage 1 est de plus assurée par au moins un joint 10, annulaire, inséré entre le couvercle 4 et la cuve 3. Il est ainsi relativement aisé de dévisser le couvercle 4 et la cuve 3 du corps de filtre 2 afin d'extraire la cartouche de filtration 7 lorsque celle-ci est usagée pour la remplacer par une cartouche de filtration 7 neuve.

La cartouche de filtration 7 comprend un premier flasque 11, dit flasque supérieur, et un deuxième flasque 12, dit flasque inférieur. La cartouche de filtration 7 comprend en outre un médium de filtration 13, de forme générale cylindrique, présentant une lumière tubulaire 14 pour entourer le tube 6, comme illustré sur la figure 1. Le médium de filtration 13 s'étend longitudinalement, selon un axe longitudinal X, entre le premier flasque 11 et le deuxième flasque 12. Le premier flasque 11 comprend un siège de soupape 15 traversé par un orifice 16 communiquant avec la lumière tubulaire 14.

Le deuxième flasque 12 intègre dans un logement un joint torique 22 formant l'étanchéité en partie inférieure de la cartouche de filtration 7.

Comme on peut le voir sur les figures 1, 3, 6 et 7, le tube 6 présente un relief extérieur consistant, dans cet exemple, en une pluralité d'ailettes 71 inclinées pour retenir le médium de filtration 13 tout en permettant le passage de fluide.

Le tube 6 est solidarisé à la cuve 3 du corps de filtre 2 en partie inférieure de celle-ci, notamment par encliquetage ou autre, l'étanchéité étant assurée par la présence de joints visibles sur ces figures incluant le joint 22, dans cet exemple.

La cartouche de filtration 7 comprend de plus un élément obturateur 20 de soupape solidaire du premier flasque 11 et apte à coopérer avec le siège de soupape 15. L'élément obturateur 20 est ainsi configuré pour occuper deux positions, à savoir une position de fermeture dans laquelle l'élément obturateur 20 obture le siège de soupape 15 et au moins une position d'ouverture dans laquelle l'élément obturateur 20 permet le passage de fluide au travers du siège de soupape 15.

L'ensemble de filtrage 1 comporte en outre un organe de rappel 21 formé dans cet exemple par un ressort, distinct de la cartouche de filtration 7, et configuré pour agir en rappelant l'élément obturateur 20 dans la position de fermeture.

Il est à noter que l'ensemble de filtrage 1 selon l'invention comporte une partie permanente comprenant le corps de filtre 2, le tube 6 et l'organe de rappel 21, et une partie amovible comprenant la cartouche de filtration 7 comportant les premier et deuxième flasques 11 et 12, le médium de filtration 13 et l'élément obturateur 20.

Ainsi, selon le principe de l'invention, la soupape de sécurité formée des trois éléments suivants, à savoir le siège de soupape 15, l'élément obturateur 20 et l'organe de rappel 21 est constituée pour partie d'éléments amovibles faisant partie de la cartouche de filtration 7, à savoir le siège de soupape 15 et l'élément obturateur 20 et pour partie d'éléments permanents, à savoir l'organe de rappel 21, qui reste à demeure lors du remplacement de la cartouche de filtration 7.

Un avantage de l'ensemble de filtrage 1 conforme à l'invention est qu'il permet de remplacer totalement la zone d'obturation formée par la zone de contact, entre le siège de soupape 15 et l'élément obturateur 20, qui peut être souillée au cours de l'utilisation de l'ensemble de filtrage 1. Cette zone souillée sera entièrement remplacée par une zone de contact propre lors du remplacement de la cartouche de filtration 7.

Un autre avantage de l'invention est dans le fait que l'organe de rappel 21 reste à demeure dans l'ensemble de filtrage 1 et n'est pas remplacé de telle sorte que le nombre de pièces constitutives de la cartouche de filtration 7 est limité. L'organe de rappel 21 peut en effet être souillé, mais cela ne gêne pas le fonctionnement du moteur.

L'organe de rappel 21 peut être au moins partiellement métallique. Dans ce cas, la cartouche de filtration 7, dépourvue de partie métallique, est incinérable.

Dans l'exemple illustré, le premier flasque 11 comporte une portion tubulaire 25, centrale dans cet exemple, au moins partiellement creuse, s'étendant, dans l'exemple illustré, autour d'une ouverture correspondant à l'orifice 16. A l'intérieur de cette portion tubulaire 25 et dans cette ouverture, l'élément obturateur 20 est retenu tout en étant mobile en translation selon l'axe longitudinal X entre une position correspondant à la position de fermeture et une position correspondant à une position d'ouverture de la soupape. L'élément obturateur 20 comporte au moins un élément en saillie 26, consistant en une pluralité de languettes dans l'exemple illustré, pouvant venir en butée contre un épaulement intérieur 27 s'étendant sur le pourtour de la portion tubulaire 25, intérieurement.

L'élément obturateur 20 comporte en outre une jupe 30 s'étendant circonférentiellement vers l'extérieur, sensiblement perpendiculairement à l'axe X. La jupe 30 présente la surface d'obturation 31 apte à venir au contact avec le siège de soupape 15 dans la position de fermeture de l'élément obturateur 20.

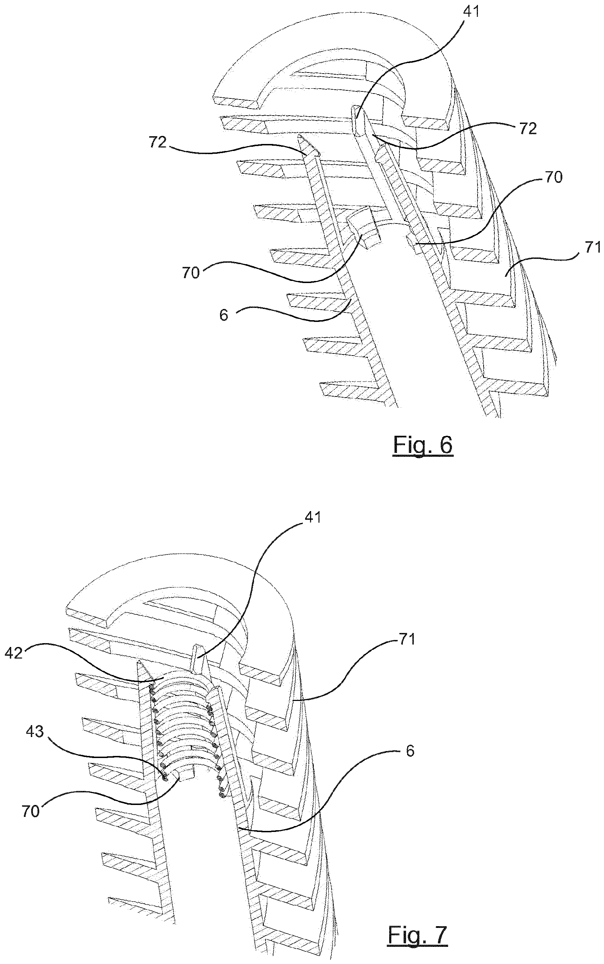

Comme visible sur les figures 3, 6 et 7, le tube 6 présente une extrémité libre 40 formant au moins partiellement un bord 41 s'étendant diamétralement, comme visible sur les figures 6 et 7, vers l'intérieur de manière à retenir l'organe de rappel 21, en l'occurrence le ressort, venant en butée contre ce bord 41 par sa première extrémité 42. Il est à noter que le bord 41 consiste, dans cet exemple en l'extrémité d'une extension vers le haut formée ici de quatre tiges 72, comme illustré et visible partiellement sur les figures 6 et 7 notamment. La présence de ces tiges 72 confère une certaine élasticité à cette portion du tube 6. Il pourrait cependant en être autrement sans sortir du cadre de l'invention.

L'extrémité opposée ou deuxième extrémité 43 de l'organe de rappel 21 est maintenue à l'intérieur du tube 6, comme illustré sur la figure 7. Dans l'exemple illustré, quatre ergots 70 présents sur une surface intérieure du tube 6, dont deux sont visibles sur les figures 6 et 7, permettent la retenue en partie basse, à la deuxième extrémité 43, de l'organe de rappel 21.

Dans l'exemple illustré, la jupe 30 comporte, outre la surface d'obturation 31 et à l'opposé de celle-ci, une surface de contact 32 avec le bord 41 du tube 6.

L'élément obturateur 20, toujours dans cet exemple illustré, comporte une zone de guidage 35 de l'organe de rappel 21. Comme illustré, la zone de solidarisation de l'élément obturateur 20 au premier flasque 11 se trouve d'un côté de la jupe 30 correspondant à la surface d'obturation 31, tandis que la zone de guidage 35 de l'organe de rappel 21 se trouve du côté opposé de la jupe 30, du côté de la surface de contact 32.

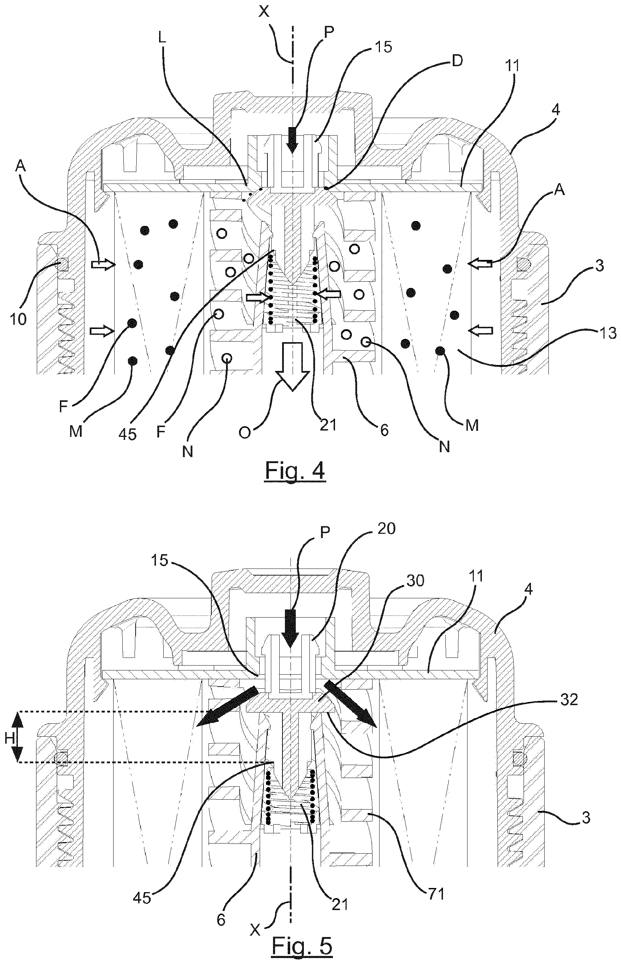

L'élément obturateur 20 comporte également une surface d'appui 45, visible notamment sur les figures 4 et 5, formant dans cet exemple un épaulement perpendiculaire à l'axe longitudinal X s'étendant autour de la zone de guidage 35. Cette surface d'appui 45 est la zone de contact, dans cet exemple circulaire, entre l'élément obturateur 20 et l'organe de rappel 21.

L'élément obturateur 20 comporte également une zone de pression 44, cette zone étant en contact avec le fluide tendant à ouvrir, par une pression P, la soupape et à placer l'élément obturateur 20 en position d'ouverture. La zone de pression 44 est illustrée sur la figure 2 par une double flèche s'étendant sur toute la zone de contact entre le fluide tendant à ouvrir la soupape et l'élément obturateur 20. Cette zone de pression 44 s'étend dans cet exemple, comme visible, essentiellement perpendiculairement à l'axe X selon un diamètre correspondant à celui de l'orifice 16.

Dans cet exemple, l'élément obturateur 20 comporte ainsi, comme illustré sur la figure 2 :
- une zone I de solidarisation avec le premier flasque 11, cette zone de solidarisation comportant notamment la surface de l'élément obturateur 20 formant la zone de pression 44 ;
- une zone K de coopération avec l'organe de rappel 21 comportant la zone de guidage 35 et la surface d'appui 45 ;
- entre ces deux zones, une zone J d'obturation comportant la jupe 30.

Les figures 4 et 5 illustrent le fonctionnement, de manière schématique, de la soupape de sécurité formée par le siège de soupape 15, l'élément obturateur 20 et l'organe de rappel 21.

La figure 5 illustre le cas où la soupape de sécurité est ouverte, en cas de fluide froid, notamment d'huile froide, dont la viscosité est telle qu'il ne peut pas passer au travers du médium de filtration 13, auquel cas il force, par la pression P qu'il exerce sur la zone de pression 44 de l'élément obturateur 20 pour le placer dans une position d'ouverture de la soupape, de manière à s'écouler. En fin de vie de la cartouche de filtration 7, lorsque celle-ci est colmatée, l'élément obturateur 20 passe également en position d'ouverture. Il est à noter qu'en position d'ouverture illustrée sur la figure 5, la surface de contact 32 vient au contact du bord 41 du tube 6 tandis que la surface d'appui 45 vient contre l'organe de rappel 21 dans sa partie supérieure, comme visible. Le fluide passe par la soupape ouverte comme illustré sur cette figure.

La figure 4 illustre la cartouche en fonctionnement, en fin de vie. Des débris D sont présents, comme illustré sur la figure 4, autour de la surface d'obturation 31 ce qui peut créer une fuite L illustrée également sur cette figure, la pression P exercée sur l'élément obturateur 15 par le fluide est contrée par la force exercée par l'organe de rappel 21 de telle sorte que malgré la fuite L, l'élément obturateur 20 est en position de fermeture. La pression P n'atteint pas, dans cette configuration, le seuil de pression prédéterminé pour permettre l'ouverture de l'élément obturateur de soupape. Comme illustré sur cette figure, un fluide sale pénètre extérieurement selon les flèches A dans le médium de filtration 13, le fluide sale étant illustré par des particules M sombres.

Le fluide filtré, propre, illustré par des particules N claires, pénètre alors dans le tube 6 et s'écoule vers le bas selon la flèche O.

Le remplacement de la cartouche de filtration 7 permet d'obtenir à nouveau une surface d'obturation propre, dépourvue de débris D.

Il est à noter que la pression seuil d'ouverture à partir de laquelle l'élément obturateur 20 s'ouvre peut être modulée en élargissant plus ou moins le diamètre R de la zone de pression 44 de l'élément obturateur 20, visible sur la figure 2. En augmentant ce diamètre, on réduit le seuil de pression d'ouverture nécessaire pour l'ouverture de la soupape ou vanne. Au contraire, en le diminuant, on augmente la pression seuil d'ouverture nécessaire pour l'ouverture de la soupape.

Par ailleurs, la longueur H selon l'axe longitudinal X de l'élément obturateur 20, visible sur la figure 5, comprise entre la surface de contact 32 et la surface d'appui 45 peut être modifiée de manière à moduler la pression seuil nécessaire pour permettre l'ouverture de la soupape, c'est-à-dire le déplacement de l'élément obturateur 20 dans une position d'ouverture. Plus cette longueur H est grande, plus la pression seuil d'ouverture de la soupape est élevée.

Il est par ailleurs à noter qu'après montage de la cartouche de filtration 7 dans la partie permanente de l'ensemble de filtrage 1, l'élément obturateur 20 n'atteint, dans cet exemple, jamais la position d'ouverture maximum illustrée sur la figure 2 quand la cartouche de filtration 7 n'est pas encore montée sur le reste de l'ensemble de filtrage 1. En effet, une fois la cartouche de filtration 7 montée, les dimensions des éléments sont choisies de manière à ménager un jeu entre l'épaulement intérieur 27 du premier flasque 11 et l'élément en saillie 26, du fait de la retenue formée par le bord 41 contre la surface de contact 32.

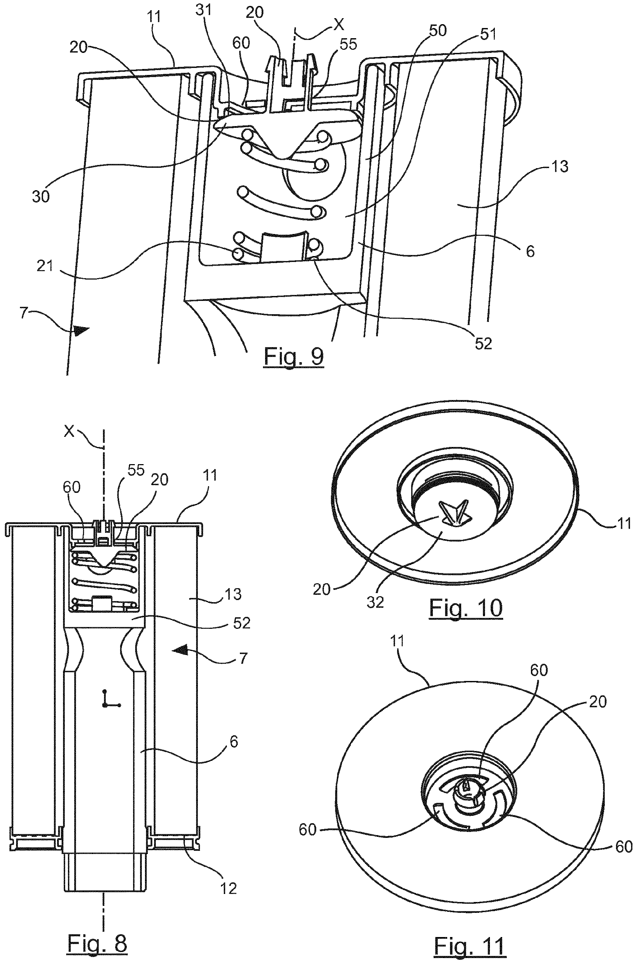

On a représenté sur les figures 8 à 11 un deuxième mode de réalisation de l'invention.

Dans ce mode de réalisation, le tube 6 comporte, dans une partie d'extrémité libre 50, un logement 51 configuré pour loger et maintenir l'organe de rappel 21. Ce logement 51 comporte une paroi de fond 52, perpendiculaire à l'axe X, coupant le tube 6 dans sa longueur.

Dans cet exemple également, le premier flasque 11 comporte une pluralité d'ouvertures 55 et 60. L'une de ces ouvertures, 55, centrale, permet la retenue de l'élément obturateur 20 tout en le laissant mobile en translation entre une position correspondant à la position de fermeture et une position correspondant à une position d'ouverture.

Par ailleurs, autour de cette ouverture 55, sont disposées une pluralité d'ouvertures 60 visibles notamment sur la figure 11, au nombre de trois dans l'exemple illustré, formant le passage de fluide quand l'élément obturateur 20 est en position d'ouverture. Ces ouvertures 60 sont formées de manière périphérique autour de l'ouverture 55.

Dans cet exemple également, la jupe 30 comporte d'un côté la surface d'obturation 31 et, à l'opposé, la surface de contact 45 avec l'organe de rappel 21.

Il est à noter que dans ce mode de réalisation, l'ouverture 55 dans le premier flasque 11 permettant la retenue de l'élément obturateur 20 est distincte des orifices 60 permettant le passage de fluide en l'absence d'obturation, c'est-à-dire en position d'ouverture.

Dans toute la description, les expressions "comportant un" ou "comprenant un" doivent être comprises comme étant synonymes respectivement des expressions "comportant au moins un" et "comprenant au moins un", sauf si le contraire est spécifié.

## Revendications

1. Ensemble de filtrage (1) pour filtrer au moins un fluide (F) circulant notamment dans un moteur ou un équipement hydraulique, comprenant :
- un corps de filtre (2),
- un tube (6) à l'intérieur du corps de filtre (2),
- une cartouche de filtration (7) amovible, logée dans le corps de filtre (2) et comprenant :
▪ un premier et un deuxième flasques (11 ; 12),
▪ un médium de filtration (13) présentant une lumière tubulaire (14) pour entourer le tube (6) et s'étendant entre le premier et le deuxième flasques (11 ; 12), le premier flasque (11) comprenant un siège de soupape (15) traversé par au moins un orifice (16) communiquant avec la lumière tubulaire (14), et
▪ un élément obturateur (20) de soupape solidaire du premier flasque (11) de manière à coopérer avec le siège de soupape (15), l'élément obturateur (20) étant configuré pour occuper au moins deux positions, à savoir une position de fermeture, dans laquelle l'élément obturateur (20) obture le siège de soupape (15) et au moins une position d'ouverture dans laquelle l'élément obturateur (20) permet le passage de fluide (F) au travers du siège de soupape (15) à partir d'une pression seuil d'ouverture de la soupape prédéterminée,
- un organe de rappel (21), distinct de la cartouche de filtration (7), configuré pour agir en rappelant l'élément obturateur (20) dans la position de fermeture, l'élément obturateur (20) présentant une surface d'obturation (31) qui est en contact avec le siège de soupape (15) dans la position de fermeture de l'élément obturateur (20),
- une zone de solidarisation de l'élément obturateur (20) au premier flasque (11) prévue d'un coté correspondant à la surface d'obturation (31), le tube (6) présentant une extrémité libre (40) formant au moins partiellement un bord (41),
**caractérisé en ce que**
l'élément obturateur (20) présente, à l'opposé de la surface d'obturation (31), une surface de contact (32) avec le bord (41) du tube (6) dans ladite au moins position d'ouverture,
le premier flasque (11) comporte une ouverture (16; 55) dans laquelle l'élément obturateur (20) est retenu, dans ladite zone de solidarisation, tout en étant mobile en translation entre
une position correspondant à la position de fermeture et une position correspondant à une position d'ouverture de la soupape,
l'ouverture (16 ; 55) étant délimitée par une portion tubulaire (25), l'élément obturateur (20) comprenant un élément en saillie (26) venant en butée contre un épaulement intérieur (27) de la portion tubulaire (25), dans ladite position d'ouverture maximum.

2. Ensemble de filtrage (1) selon la revendication 1, dans laquelle ladite ouverture (16 ; 55) est circulaire.

3. Ensemble de filtrage (1) selon la revendication 2, dans laquelle l'ouverture est confondue avec ledit au moins un orifice (16) traversant le siège de soupape (15) et au travers duquel peut passer le fluide (F).

4. Ensemble de filtrage (1) selon la revendication 2, dans laquelle l'ouverture (55) est distincte dudit au moins un orifice (16) traversant le siège de soupape (15) et au travers duquel peut passer le fluide (F), en position d'ouverture de l'élément obturateur (20).

5. Ensemble de filtrage (1) selon l'une quelconque des revendications précédentes, dans lequel l'élément obturateur (20) comporte une jupe (30) présentant la surface d'obturation (31).

6. Ensemble de filtrage (1) selon l'une quelconque des revendications précédentes, dans lequel le tube (6) est au moins partiellement creux et dans lequel l'organe de rappel (21) est monté dans le tube (6).

7. Ensemble de filtrage (1) selon l'une quelconque des revendications précédentes, dans lequel l'organe de rappel (21) comporte un ressort.

8. Ensemble de filtrage (1) selon les deux revendications immédiatement précédentes, dans lequel le bord (41) du tube s'étend diamétralement vers l'intérieur du tube (6) de manière à retenir l'organe de rappel (21) venant en butée contre ledit bord (41) par sa première extrémité (42), dans lequel le bord (41) consiste en l'extrémité d'une extension vers le haut formée de quatre tiges (72) et dans lequel une surface intérieure du tube (6) permet la retenue en partie basse, à une deuxième extrémité (43), de l'organe de rappel 21.

9. Ensemble de filtrage (1) selon l'une quelconque des revendications précédentes, dans lequel l'élément obturateur (20) comporte une zone de coopération (K) avec l'organe de rappel (21), comportant une surface d'appui (45) de l'organe de rappel (21) et/ou une zone de guidage (35) de l'organe de rappel (21), ladite surface d'appui (45) étant entre l'élément obturateur (20) et l'organe de rappel (21).

10. 11. Ensemble de filtrage (1) selon l'une quelconque des revendications précédentes, dans lequel le médium de filtration (13) est choisi dans le groupe constitué par : la cellulose, notamment le papier ou le carton, le feutre et un matériau poreux tissé ou non-tissé, synthétique ou non.

11. Ensemble de filtrage (1) selon l'une quelconque des revendications précédentes, dans lequel l'élément obturateur (20) comporte un matériau polymère, notamment du polyamide.

12. Méthode de remplacement de l'ensemble de filtrage (1) selon l'une quelconque des revendications précédentes, dans lequel l'ensemble de filtrage et la cartouche de filtration sont conçus pour permettre le remplacement de la cartouche de filtration, sans changer le reste de l'ensemble de filtrage, par une autre cartouche de filtration, comprenant le retrait de la cartouche de filtration et l'insertion de ladite autre cartouche de filtration, et dans lequel l'élément obturateur (20) de l'autre cartouche de filtration présente une zone de pression (44) soumise à la pression du fluide (F) pour forcer l'ouverture de la soupape, la zone de pression de ladite autre cartouche de filtration présentant un diamètre (R) différent de celui de l'élément obturateur de ladite cartouche de filtration.

13. **14.** Méthode de remplacement de l'ensemble de filtrage (1) selon l'une quelconque des revendications précédentes et la revendication 9, dans lequel l'ensemble de filtrage et la cartouche de filtration sont conçus pour permettre le remplacement de la cartouche de filtration, sans changer le reste de l'ensemble de filtrage, par une autre cartouche de filtration, comprenant le retrait de la cartouche de filtration et l'insertion de ladite autre cartouche de filtration, et dans lequel l'élément obturateur (20) de l'autre cartouche de filtration présente une longueur (H), comprise entre la surface d'appui (45) et une surface de contact (32) de l'élément obturateur avec le tube (4), qui est différente de celle de l'élément obturateur (20) de la cartouche de filtration.

## Patentansprüche

1. Filteranordnung (1) zum Filtern mindestens einer Flüssigkeit (F), die insbesondere in einem Motor oder einer Hydraulikanlage zirkuliert, die Folgendes umfasst:
- ein Filtergehäuse (2),
- ein Rohr (6) im Innern des Filtergehäuses (2),
- eine herausnehmbare Filterpatrone (7), die in dem Filtergehäuse (2) untergebracht ist und Folgendes umfasst:
▪ einen ersten und einen zweiten Flansch (11; 12),
▪ ein Filtermedium (13) mit einem röhrenförmigen Lumen (14), das das Rohr (6) umgibt und sich zwischen dem ersten und dem zweiten Flansch (11; 12) erstreckt, wobei der erste Flansch (11) einen Ventilsitz (15) umfasst, der sich durch mindestens eine Öffnung (16) erstreckt, die mit dem röhrenförmigen Lumen (14) in Verbindung steht, und
▪ ein mit dem ersten Flansch (11) integriertes Ventilschließelement (20) zum Zusammenzuwirken mit dem Ventilsitz (15), wobei das Schließelement (20) so konfiguriert ist, dass es mindestens zwei Positionen einnimmt, nämlich eine Schließposition, in der das Schließelement (20) den Ventilsitz (15) verschließt, und mindestens eine Öffnungsposition, in der das Schließelement (20) die Passage von Flüssigkeit (F) durch den Ventilsitz (15) von einem vorbestimmten Ventilöffnungsschwellendruck zulässt,
- ein von der Filterpatrone (7) getrenntes Rückstellelement (21), das so konfiguriert ist, dass es durch Zurückstellen des Schließelements (20) in die Schließposition wirkt, wobei das Schließelement (20) eine Verschlussfläche (31) aufweist, die in der Schließposition des Schließelements (20) mit dem Ventilsitz (15) in Kontakt steht,
- einen Bereich zum festen Verbinden des Schließelements (20) mit dem ersten Flansch (11), der auf einer Seite vorgesehen ist, die der Verschlussfläche (31) entspricht, wobei das Rohr (6) ein freies Ende (40) aufweist, das mindestens teilweise einen Rand (41) bildet,
**dadurch gekennzeichnet, dass**
das Schließelement (20) gegenüber der Verschlussfläche (31) eine Kontaktfläche (32) mit dem Rand (41) des Rohrs (6) in der mindestens einen Öffnungsposition aufweist,
der erste Flansch (11) eine Öffnung (16; 55) aufweist, in der das Schließelement (20) im festen Verbindungsbereich festgehalten wird, während es zwischen einer Position entsprechend der Schließposition und einer Position entsprechend der Öffnungsposition des Ventils translatorisch beweglich ist,
wobei die Öffnung (16; 55) durch einen rohrförmigen Abschnitt (25) begrenzt ist, wobei das Schließelement (20) ein auskragendes Element (26) umfasst, das in der maximalen Öffnungsposition an einer inneren Schulter (27) des röhrenförmigen Abschnitts (25) zur Anlage kommt.

2. Filteranordnung (1) nach Anspruch 1, wobei die Öffnung (16; 55) kreisförmig ist.

3. Filteranordnung (1) nach Anspruch 2, wobei die Öffnung mit der mindestens einen Öffnung (16) zusammenfällt, die durch den Ventilsitz (15) verläuft und durch die die Flüssigkeit (F) fließen kann.

4. Filteranordnung (1) nach Anspruch 2, wobei die Öffnung (55) von der mindestens einen Öffnung (16), die durch den Ventilsitz (15) verläuft und durch die die Flüssigkeit (F) fließen kann, in der Öffnungsposition des Schließelements (20) getrennt ist.

5. Filteranordnung (1) nach einem der vorherigen Ansprüche, wobei das Schließelement (20) eine Schürze (30) mit der Verschlussfläche (31) umfasst.

6. Filteranordnung (1) nach einem der vorherigen Ansprüche, wobei das Rohr (6) mindestens teilweise hohl ist und wobei das Rückstellelement (21) in dem Rohr (6) montiert ist.

7. Filteranordnung (1) nach einem der vorherigen Ansprüche, wobei das Rückstellelement (21) eine Feder umfasst.

8. Filteranordnung (1) nach den beiden unmittelbar vorhergehenden Ansprüchen, bei der sich der Rand (41) des Rohrs diametral zur Innenseite des Rohrs (6) erstreckt, um das Rückstellelement (21) festzuhalten, das mit seinem ersten Ende (42) am Rand (41) zur Anlage kommt, wobei der Rand (41) aus dem Ende einer nach oben gerichteten Verlängerung besteht, die aus vier Stäben (72) gebildet ist, und wobei eine Innenfläche des Rohrs (6) ein Festhalten im unteren Teil an einem zweiten Ende (43) des Rückstellelements (21) ermöglicht.

9. Filteranordnung (1) nach einem der vorherigen Ansprüche, wobei das Schließelement (20) einen Bereich (K) zum Zusammenwirken mit dem Rückstellorgan (21) aufweist, der eine Auflagefläche (45) des Rückstellelements (21) und/oder einen Führungsbereich (35) des Rückstellelementes (21) aufweist, wobei die Auflagefläche (45) zwischen dem Schließelement (20) und dem Rückstellelement (21) liegt.

10. Filteranordnung (1) nach einem der vorherigen Ansprüche, wobei das Filtermedium (13) ausgewählt ist aus der Gruppe bestehend aus: Zellulose, insbesondere Papier oder Pappe, Filz und einem gewebten oder ungewebten porösen Material, synthetisch oder nicht.

11. Filteranordnung (1) nach einem der vorherigen Ansprüche, wobei das Schließelement (20) ein polymeres Material, insbesondere Polyamid, umfasst.

12. Verfahren zum Auswechseln der Filteranordnnung (1) nach einem der vorherigen Ansprüche, wobei die Filteranordnung und die Filterpatrone konzipiert sind, um das Auswechseln der Filterpatrone, ohne den Rest der Filteranordnung auszuwechseln, gegen eine andere Filterpatrone zu ermöglichen, das das Entfernen der Filterpatrone und das Einsetzen der anderen Filterpatrone beinhaltet, und wobei das Schließelement (20) der anderen Filterpatrone einen Druckbereich (44) aufweist, der dem Fluiddruck (F) ausgesetzt ist, um das Öffnen des Ventils zu erzwingen, wobei der Druckbereich der anderen Filterpatrone einen Durchmesser (R) hat, der sich von dem des Schließelements der Filterpatrone unterscheidet.

13. Verfahren zum Auswechseln der Filteranordnung (1) nach einem der vorherigen Ansprüche und Anspruch 9, wobei die Filteranordnung und die Filterpatrone konzipiert sind, um das Auswechseln der Filterpatrone durch eine andere Filterpatrone zuzulassen, ohne den Rest der Filteranordnung auszuwechseln, das das Entfernen der Filterpatrone und das Einsetzen der anderen Filterpatrone beinhaltet, und wobei das Schließelement (20) der anderen Filterpatrone eine Länge (H) zwischen der Auflagefläche (45) und einer Kontaktfläche (32) des Schließelements mit dem Rohr (4) aufweist, die sich von der des Schließelements (20) der Filterpatrone unterscheidet.

## Claims

1. A filtering assembly (1) for filtering at least one fluid (F) particularly circulating in an engine or in hydraulic equipment, comprising:
- a filter body (2);
- a tube (6) inside the filter body (2);
- a detachable filtration cartridge (7), housed in the filter body (2) and comprising:
▪ a first and a second flange (11, 12);
▪ a filtration medium (13) having a tubular opening (14) for surrounding the tube (6) and extending between the first and second flanges (11, 12), the first flange (11) comprising a valve seat (15), through which at least one orifice (16) passes that communicates with the tubular opening (14); and
▪ a valve sealing element (20) rigidly connected to the first flange (11) so as to engage with the valve seat (15), the sealing element (20) being configured to assume at least two positions, namely a closed position, in which the sealing element (20) seals the valve seat (15), and at least one open position, in which the sealing element (20) allows fluid (F) to pass through the valve seat (15) from a predetermined valve opening pressure threshold;
- a return component (21), separate from the filtration cartridge (7), configured to act by returning the sealing element (20) to the closed position, the sealing element (20) having a sealing surface (31), which is in contact with the valve seat (15) in the closed position of the sealing element (20);
- a zone for rigidly connecting the sealing element (20) to the first flange (11), provided on a side corresponding to the sealing surface (31), the tube having a free end (40) at least partially forming an edge (41),
**characterised in that**
the sealing element (20) has, opposite the sealing surface (31), a contact surface (32) with the edge (41) of the tube (6) in said at least one open position,
the first flange (11) comprises an opening (16, 55), in which the sealing element (20) is retained, in said rigid connection zone, whilst being translationally movable between a position corresponding to the closed position and a position corresponding to an open position of the valve,
the opening (16, 55) being demarcated by a tubular portion (25), the sealing element (20) comprising a projecting element (26) coming into abutment against an internal shoulder (27) of the tubular portion (25), in said maximum opening position.

2. The filtering assembly (1) according to claim 1, wherein said opening (16, 55) is circular.

3. The filtering assembly (1) according to claim 2, wherein the opening is coincident with said at least one orifice (16) passing through the valve seat (15) and through which the fluid (F) can pass.

4. The filtering assembly (1) according to claim 2, wherein the opening (55) is separate from said at least one orifice (16) passing through the valve seat (15) and through which the fluid (F) can pass, in the open position of the sealing element (20).

5. The filtering assembly (1) according to any one of the preceding claims, wherein the sealing element (20) comprises a skirt (30) having the sealing surface (31).

6. The filtering assembly (1) according to any one of the preceding claims, wherein the tube (6) is at least partially hollow and wherein the return component (21) is mounted in the tube (6).

7. The filtering assembly (1) according to any one of the preceding claims, wherein the return component (21) comprises a spring.

8. The filtering assembly (1) according to the two immediately preceding claims, wherein the edge (41) of the tube diametrically extends towards the inside of the tube (6), so as to retain the return component (21) coming into abutment against said edge (41) by its first end (42), wherein the edge (41) is made up of the end of an upwards extension formed by four rods (72) and wherein an internal surface of the tube (6) allows the return component (21) to be retained in the lower part at a second end (43).

9. The filtering assembly (1) according to any one of the preceding claims, wherein the sealing element (20) comprises a zone (K) for engaging with the return component (21), which zone comprises a bearing surface (45) for the return component (21) and/or a guide zone (35) for the return component (21), said bearing surface (45) being located between the sealing element (20) and the return component (21).

10. The filtering assembly (1) according to any one of the preceding claims, wherein the filtration medium (13) is selected from the group consisting of: cellulose, in particular paper or cardboard, felt and a porous woven or unwoven material, which may or may not be synthetic.

11. The filtering assembly (1) according to any one of the preceding claims, wherein the sealing element (20) comprises a polymer material, in particular polyamide.

12. A method for replacing the filtering assembly (1) according to any one of the preceding claims, wherein the filtering assembly and the filtration cartridge are designed to allow the filtration cartridge to be replaced, without changing the rest of the filtering assembly, with another filtration cartridge, involving the removal of the filtration cartridge and the insertion of said other filtration cartridge, and wherein the sealing element (20) of the other filtration cartridge has a pressure zone (44) subject to the pressure of the fluid (F) in order to force the valve to open, the diameter (R) of the pressure zone of said other filtration cartridge differing from the diameter of the sealing element of said filtration cartridge.

13. The method for replacing the filtering assembly (1) according to any one of the preceding claims and claim 9, wherein the filtering assembly and the filtration cartridge are designed to allow the filtration cartridge to be replaced, without changing the rest of the filtering assembly, with another filtration cartridge, involving the removal of the filtration cartridge and the insertion of said other filtration cartridge, and wherein the length (H) of the sealing element (20) of the other filtration cartridge, between the bearing surface (45) and a contact surface (32) of the sealing element with the tube (4), differs from that of the sealing element (20) of the filtration cartridge.
